# EUROPÄISCHE PATENTSCHRIFT

(11) **EP 0 670 964 B1**
(45) Veröffentlichungstag und Bekanntmachung des Hinweises auf die Patenterteilung: **25.09.1996**
(21) Anmeldenummer: 94900143.2
(22) Anmeldetag: 13.11.1993
(51) Int. Cl.: F04B 1/04, F04B 53/10, B23P 11/00

(54) **VENTIL, INSBESONDERE DRUCKVENTIL FÜR EINE RADIALKOLBENPUMPE, MIT WENIGEN KOMPONENTEN**
VALVE WITH FEW COMPONENTS, ESPECIALLY A PRESSURE VALVE FOR A RADIAL PISTON PUMP
SOUPAPE COMPORTANT PEU DE COMPOSANTS, EN PARTICULIER SOUPAPE DE PRESSION POUR POMPE A PISTONS RADIAUX

(30) Priorität: 24.11.1992 DE 4239362
(43) Veröffentlichungstag der Anmeldung: 13.09.1995
(73) Patentinhaber: ITT Automotive Europe GmbH, D-60488 Frankfurt am Main (DE)
(72) Erfinder: BECK, Erhard, D-35781 Weilburg (DE); OTTO, Albrecht, D-63454 Hanau (DE)
(74) Vertreter: Portwich, Peter
(86) Internationale Anmeldenummer: EP9303186
(87) Internationale Veröffentlichungsnummer: WO9412789

(56) Entgegenhaltungen:
- EP-A- 0 197 320
- US-A- 2 056 160
- US-A- 4 284 391
- PATENT ABSTRACTS OF JAPAN vol. 009, no. 333 (M-443)27. Dezember 1985 & JP,A,60 164 080 (SHINKOU RASHI KK) 27. August 1985

## Beschreibung

Die Erfindung betrifft ein aus wenigen Komponenten aufgebautes, einfaches Ventil, das insbesondere als Druckventil für Radialkolbenpumpen ausgestaltet sein soll. Derartige Radialkolbenpumpen dienen beispielsweise als Hochdruckpumpen zur Förderung von Druckmittel in geregelten Bremsanlagen. Als Druckmittel dient dabei Bremsflüssigkeit.

Eine derartige Pumpe ist beispielsweise aus der DE-OS 40 27 794 bekannt. Diese Radialkolbenpumpe ist sowohl mit einem Saugventil als auch mit einem Druckventil versehen. Der Druckraum des Druckventils ist über einen in ein Gehäuse eingeschraubten Deckel abgedichtet, wobei der Deckel mit einem Dichtring versehen ist. Zu dem bekannten Druckventil gehört weiterhin noch ein kugelförmiger Ventilkörper, eine diesen vorspannende Feder, sowie ein Ventilsitz. Man benötigt für die Funktion des Druckventils somit regelmäßig 5 Bauelemente .

Die Erfindung geht daher aus von einem Ventil der sich aus dem Oberbegriff des Anspruchs 1 ergebenden Gattung.

Aufgabe der Erfindung ist es ein derartiges Ventil durch eine Verminderung der benötigten Bauteile zu vereinfachen und damit kostengünstiger zu gestalten.

Die Erfindung wird durch die sich aus dem kennzeichnenden Teil des Anspruches 1 ergebenden Merkmalskombination gelöst. Die Erfindung besteht im Prinzip also darin, durch Wahl einer neuartigen Verbindungsart, gleichzeitig eine Halte- und eine Dichtfunktion zu erreichen, so daß auf besondere Dichtmittel verzichtet werden kann. Voraussetzung für die Wirksamkeit der gefundenen Maßnahmen ist, daß der Einpressdruck des Ventilsitzes so groß gewählt ist, daß tatsächlich hinreichend Material des stufenförmigen Absatzes in die Hohlkehle des Ventilsitzes fließt. Die umlaufende Hohlkehle erstreckt sich dabei im Winkel zu den beiden umlaufenden Flächen des stufenförmigen Absatzes, so daß das in die Hohlkehle eintretende Gehäusematerial eine Hinterschneidung zu der Außenkontur des Ventilsitzes bildet. Auf diese Weise wird sowohl eine Haltefunktion als auch eine Dichtfunktion erreicht, da das Gehäusematerial die Hohlkehle unter Druck vollständig ausfüllt und somit die beiden Komponenten dichtend, unlösbar verbindet.

Die erfindungsgemäße Maßnahme läßt sich mit Vorteil auch hinsichtlich des Deckels anwenden, wobei sich die Ausgestaltung nach Anspruch 2 bewährt hat. Der Ventilsitz trägt somit nicht nur das Ventil, sondern schafft auch eine ringförmige Aufnahme für einen in den Ventilsitz einpreßbaren Deckel, wobei dieser wieder durch Kaltfließpressen nach der eingangs beschriebenen Methode dichtend mit dem Ventilsitz verbunden werden kann. Ein nachträgliches Einpressen des Deckels ist deshalb notwendig, da der Ventilkörper durch eine Ventilfeder vorgespannt wird und beide Elemente erst bei geöffnetem Deckel eingesetzt werden müssen, bevor der Deckel geschlossen werden kann. Durch die beschriebenen Maßnahme läßt sich das Ventil einschließlich des Deckels von 5 Elementen auf 4 Elemente reduzieren.

Eine andere, von den Merkmalen nach Anspruch 2 oder 3 abweichende, elementeeinsparende Konstruktion ist durch die Merkmalskombination nach Anspruch 5 gegeben. Danach wird auf den ringförmigen Ringansatz verzichtet und der Deckel nicht in den Ringansatz eingefügt, sondern nach Einbau des Ventilkörpers und der Ventilfeder direkt durch Kaltfließpressen mit dem Gehäuse in einem weiteren Schritt verbunden.

Eine zusätzliche Einsparung von Bauelementen ergibt sich durch die Wahl der Konstruktion nach Anspruch 5. Danach ist es möglich den Deckel selbst mit dem Ventilsitz einstückig zu vereinen. Allerdings ergibt sich dabei noch das Problem, daß der Ventilkörper samt Feder in dieser Einheit noch gehalten werden muß. Dieses Problem wird vorteilhaft durch die Merkmalskombination nach Anspruch 7 gelöst. Dabei wird also die Einheit aus Ventilsitz und Deckel zuerst mit dem Ventilkörper und der Vorspannfeder bestückt und die bestückte Einheit dann durch Anwendung einer Kaltfließ-Pressung in dem Gehäuse verankert.

Die Einheit aus Ventilsitz und Deckel besitzt ein Volumen, welches die Anwendung der Merkmalskombination nach Anspruch 8 erlaubt. Hierdurch wird das durch die Pumpe erzeugte Druckmittel über eine Blende zu dem Auslaß im Gehäuse geleitet. Auf diese Weise hat das am Auslaß des Gehäuses anliegende Druckmittel vergleichsweise geringfügige Druckschwankungen, da die Blende Hochdruckpulse des Druckmittels dämpft. Es ist allerdings dabei dafür zu sorgen, daß das in dem Ventilraum über das Druckventil gepumpte Druckmittel nicht direkt zu dem Auslaß im Gehäuse fließen kann, sondern nur über die mit der Blende versehene Verbindung. Der Ventilraum wird somit in zweckmäßigerweise mittels eines abgedichteten Stopfens verschlossen. Es versteht sich, daß durch dieses zusätzliche Merkmal die Anzahl der für das Ventil benötigten Elemente sich vermehrt. Der Stopfen kann allerdings ebenso wiederum durch Kaltfließpressung in die Ventilsitz-Deckeleinheit dichtend eingepresst werden, wobei hier das Material für den Stopfen in der Regel weicher sein wird als die Einheit aus Ventilsitz und Deckel.

Eine besonders einfache Verbindung zwischen Ventilraum und Dämpfungskammer ergibt sich durch Anwendung der Merkmalskombination nach Anspruch 9. Hierbei ergibt sich gemäß Anspruch 10 auch eine besonders einfache Ausgestaltung für die Blende innerhalb der Verbindung.

Eine bevorzugte Bauweise für den Hohlraum läßt sich der Merkmalskombination nach Anspruch 11 entnehmen. Die Erfindung läßt aber auch zu, daß zusätzlich in die Verbindung noch ein Filter zum Reinigen der unter Druck abgegebenen Bremsflüssigkeit eingebaut werden kann.

Entsprechend dem Aufbau der Hohlkehlen muß das Material des Deckelkörpers härter sein als das des Gehäuses. Es ist aber auch die umgekehrte Konstellation nach Anspruch 13 möglich, indem die Hohlkehlen in entsprechende Stufen, des Gehäuses eingarbeitet sind und das weichere Material des Deckelkörpers in die Hohlkehlen des Gehäuses fließt.

Ausführungsbeispiele der Erfindung werden nachfolgend anhand der Zeichnung erläutert. Darin zeigt
- Fig. 1: eine Ausführungsform des Ventil mit 4 Bauelementen
- Fig. 2: eine abgeänderte Ausführungsform des Ventils mit ebenfalls 4 Bauelementen
- Fig. 3: eine dritte Ausführungsform des erfindungsgemäßen Ventils mit 3 Bauelementen und
- Fig. 4: eine modifizierte Ausführungsform des Ventils nach Figur 3.

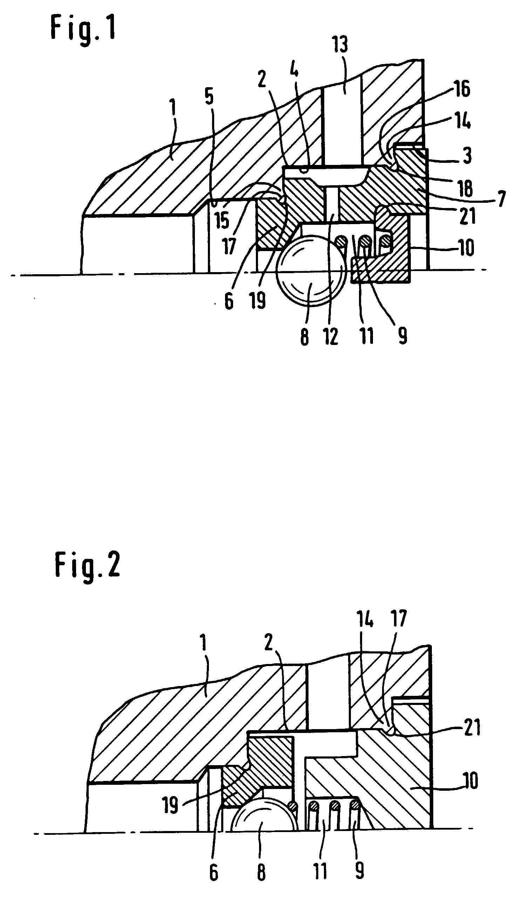

Figur 1 zeigt einen Ausschnitt aus einem Gehäuse 1, welches das Gehäuse einer Hochdruck-Radialkolbenpumpe sein kann, wie sie beispielsweise in der DE-OS 40 27 794 gezeigt ist.

Das Gehäuse ist mit einer Stufenbohrung 2 versehen, welche einen ersten Bohrungsabschnitt 3, einen zweiten Bohrungsabschnitt 4 und einen dritten Bohrungsabschnitt 5 aufweist. Hieran können sich weitere Bohrungsabschnitte anschließen, die beispielsweise den Kolben der

Radialkolbenpumpe aufnehmen. In der Stufenbohrung 2 sitzt ein Ventilsitz 6, der einstückig in einen ringförmigen Ventilansatz 7 übergeht. Gegen den Ventilsitz 6 wird ein Ventilkörper 8 über eine Feder 9 gedrückt, die sich am entgegengesetzten Ende an einem Deckel 10 abstützt. Durch den Innenraum des Ventilsitzes 6 und den Deckel 10 wird ein Ventilraum 11 begrenzt, der über eine Durchtrittsöffnung 12 und den Innenraum des zweiten Bohrungsabschnittes 4 mit einem Gehäuseauslaß 13 verbunden ist. Von dem Gehäuseauslaß 13 kann das von der Pumpe geförderte, unter Druck stehende Druckmittel vom Gehäuse 1 abgenommen werden.

Für die Erfindung besonders wichtig ist nun, daß das Material des Gehäuses und der Einheit aus Ventilsitz und Ringansatz eine unterschiedliche Festigkeit hat. D.h., das eine Material ist weicher als das andere. Beim vorliegenden Ausführungsbeispiel wird angenommen, daß das Gehäuse aus weichem Aluminium besteht, während Ventilsitz 6 mit Ringansatz 7 aus einem festen Stahl gebildet sind. Weiterhin ist sehr wichtig, daß der Übergang von dem ersten Bohrungsabschnitt 3 in den zweiten Bohrungsabschnitt 4, sowie von dem zweiten Bohrungsabschnitt 4 in den dritten Bohrungsabschnitt 5 treppenförmig verläuft, so daß sich eine erste umlaufende Stufe 14 und eine zweite umlaufende Stufe 15 ergibt. Der jeweiligen Stufenkante 16 bzw. 17 liegt eine umlaufende Hohlkehle 18 bzw. 19 gegenüber. Sowohl der Ventilsitz 6 als auch der Ringansatz 7 haben zwei Abschnitte unterschiedlichen Durchmessers, wobei der breite Abschnitt auf dem Boden eines Bohrungsabschnittes, beispielsweise hinsichtlich des Ventilsitzes 6 des zweiten Bohrungsabschnittes 4 aufsitzt, während der schlanke Abschnitt in den nachfolgenden schlankeren Bohrungsabschnitt (z.B. dritter Bohrungsabschnitt 5) ragt. Die beiden Abschnitte des Ventilsitzes 6 sind, wie schon erwähnt durch die Hohlkehle 19 getrennt. Entsprechendes gilt für den Ringansatz 7, der mit seinem breiteren Abschnitt im ersten Bohrungsabschnitt 3 aufsitzt und mit seinem schlankeren Abschnitt in den zweiten Bohrungsabschnitt 4 ragt.

Wird nun beispielsweise der Ventilsitz 6 gegen die Stufe 15 des Gehäuses 1 gepresst, so weicht das so gepresste Stufenmaterial aus und fließt in die Hohlkehle 19. Entsprechendes gilt hinsichtlich des Ringansatzes 7, dessen Hohlkehle 18 beim Einpressen durch das Material der Stufe 14 gefüllt wird. Beide Vorgänge spielen sich wegen der Einstückigkeit des Ventilsitzes 6 mit dem Ringansatz 7 naturgemäß gleichzeitig ab. Das unter Druck in die Hohlkehlen 18,19 eingefügte Material des Gehäuses 1 bildet eine Hinterschneidung, die ein Herausziehen der Einheit 6,7 aus der Stufenbohrung 2 verhindert und gleichzeitig einen erheblichen Druck innerhalb des dritten Bohrungsabschnittes 5 bzw. im zweiten Bohrungsabschnitt 4 gegenüber dem folgenden, breiteren Bohrungsabschnitt abzudichten vermag. Auf diese Weise werden die sonst notwendigen ringförmigen O-Dichtungen und die hierfür notwendigen Nuten eingespart und gleichzeitig die Montagezeit verkürzt. Durch die hier beschriebenen Merkmale wird auch die Montage mit Hilfe von Automaten vereinfacht, da unter anderem die Bauelemente nicht mit Dichtungsringen bestückt werden müssen.

Nachdem der Ventilsitz 6 in das Gehäuse 1 in der beschriebenen Weise dichtend eingepresst und mit dem Ventilkörper 8 und der Feder 9 bestückt wurde, kann nach dem beschriebenen Kaltfließverfahren ein Deckel 10 eingesetzt werden, der wiederum aus weicherem Material als der Ventilsitz 6 bzw. der Ringansatz 7 besteht. Hierzu ist wieder eine Hohlkehle 21 in dem Ringansatz 7 vorgesehen, die an einer Stufe im Ringansatz 7 angeordnet ist. Wird der Deckel 10 auf die Stufe gepresst, so fließt ein Teil des Materials des Deckels in die Hohlkehle 21. Durch die so gebildete Hinterschneidung des Deckelmaterials gegenüber dem Ringansatz 7 ist der Deckel unlösbar und dichtend mit dem Ringansatz 7 verbunden und schließt somit den Ventilraum 11 gegenüber der Umgebung druckdicht ab.

Bei den nachfolgend beschriebenen Ausführungsbeispielen erhalten die mit den Bauelementen in Figur 1 vergleichbaren Bauelemente die gleichen Bezugszeichen. Die Ausführungsbeispiele nach Figur 2 bis 4 werden nur insoweit beschrieben, wie sie Abweichungen gegenüber Figur 1 enthalten.

Bei dem Ausführungsbeispiel nach Figur 2 ist der Ventilsitz 6 in der gleichen Form, wie schon in Zusammenhang mit Figur 1 beschrieben, in die Stufenbohrung 2 des Gehäuses 1 eingesetzt. Die Hohlkehle 19 ist wiederum gegenüber der Längsachse des Ventils 45° geneigt. Der kugelförmige Ventilkörper 8 stützt sich wiederum an dem Deckel 10 ab. Der wesentliche Unterschied zu Figur 1 besteht darin, daß der Deckel 10 direkt mit dem Gehäuse 1 unlösbar und dichtend durch Kaltfließpressen verbunden ist, indem Material der ersten Stufe 14 in die Hohlkehle 21 eingepresst wird. Dabei ragt wiederum die Kante 17 in die Hohlkehle 21. Da in diesem Falle der Deckel 10 mit dem weichen Gehäuse 1 zusammenarbeitet muß das Material des Deckels 10 härter als das Material des Gehäuses (Aluminium) sein, damit die gewünschte Fließbewegung unter dem Einpressdruck auch stattfindet. Wie weiter oben schon erläutert muß dem gegenüber beim Ausführungsbeispiel nach Figur 1 das Material des Deckels weicher als das Material des Ventilsitzes 6 und damit des Ringansatzes 7 sein, damit das Deckelmaterial in die Hohlkehle 21 fließen kann.

Der wesentliche Vorteil der Ausführungsform nach Figur 1 gegenüber Figur 2 besteht darin, daß durch Zerstören des Deckels 10 Zugriff zu dem Ventilraum 11 besteht und hierdurch gegebenenfalls Reparaturen oder Einstellungen vorgenommen werden können. Dies ist bei der Ausführungsform nach Figur 2 nicht der Fall, da hier die Formveränderung bei dem Gehäuse 1 stattgefunden hat und das erneute Einpressen eines Deckels nur bedingt möglich ist und nicht mehr zu einer sicheren und dichtenden Verbindung führt. Andererseits ist der Aufbau nach Figur 2 hinsichtlich der herabgesetzten Anzahl von Fließpressverbindungen (zweiHohlkehlen 19,21 statt drei Hohlkehlen 18,19,21 in Figur 1). Soweit also es unnötig ist, den Deckel 10 während der Lebensdauer des Gehäuses 1 zu öffnen ist die Ausgestaltung nach Figur 2 vorzuziehen.

Eine weitere Änderung ergibt sich dadurch, daß die Wirkung der Durchtrittsöffnung gemäß Figur 1 durch den Zwischenraum zwischen dem Ventilsitz 6 und dem Deckel 10 ersetzt wird. Auch hierdurch ergibt sich eine einfacherere Konstruktion.

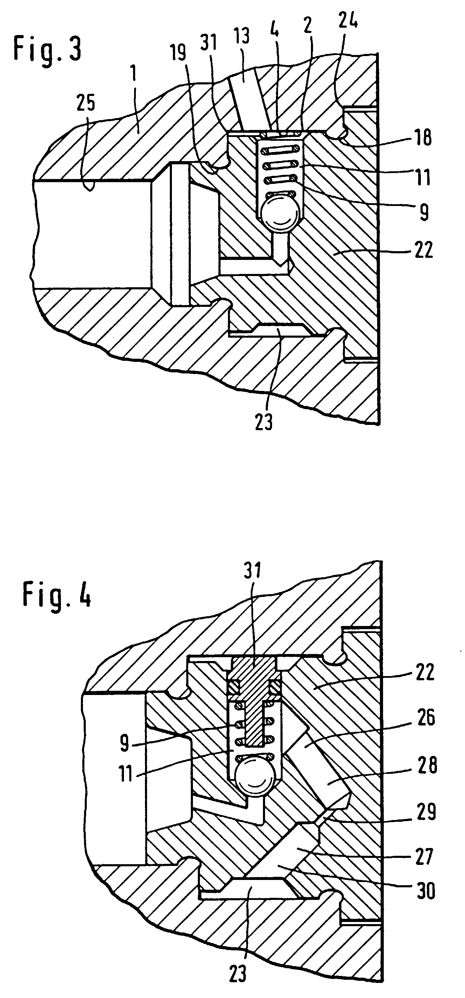

Während bei den Ausführungsbeispielen nach Figur 1 und 2 das Ventil mit 4 Bauelementen auskommt, nämlich Ventilsitz 6, Ventilkörper 8, Feder 9 und Deckel 10, läßt die Ausführungsform nach Figur 3 zusätzlich die Einsparung eines weiteren Bauelementes zu. Hierzu wird gegenüber Figur 2 der Ventilsitz 6 und der Deckel 10 gemäß Figur 2 zu einem kombinierten Deckelkörper 22 vereint, in den der Ventilsitz eingefügt ist. Der Deckelkörper ist, wie die Einheit aus Ventilsitz 6 und Ringansatz 7 nach Figur 1 durch Kaltfließpressen in das Gehäuse 1 eingefügt. Anstatt wie dort nun einen Deckel 10 vorzusehen, gegen den sich die Feder 9 abstützt ist bei dem Ausführungsbeispiel nach Figur 3 der Deckel mit dem Ringansatz und dem Ventilsitz vereint. Als Abstützfläche für die Feder 9 wird die Mantelfläche des zweiten Bohrungsabschnittes 4 der Stufenbohrung 2 angewendet. Im Ergebnis bedeutet dies, daß die Lage des Ventilsitzes gegenüber den Ausführungsbeispielen nach Figur 1 und 2 um 90° gedreht wird, so daß der Ventilraum 11 nunmehr in radialer Richtung verläuft.

Entsprechend dem Aufbau der Hohlkehlen 18,19 in Figur 3 muß das Material des Deckelkörpers härter sein als das des Gehäuses 1. Es ist aber auch die umgekehrte Konstellation denkbar, indem die Hohlkehlen in entsprechende Stufen z.B. an den Stellen 23,24 des Gehäuses 1 eingarbeitet sind und das weichere Material des Deckelkörpers in die Hohlkehlen des Gehäuses fließt.

Um die Einbaulage des Deckelkörpers 22 in das Gehäuse 1 drehwinkelunabhängig zu machen, besitzt der Deckelkörper 22 eine umlaufende Nut 23, in die der als Radialbohrung ausgestaltete Ventilraum 11 mündet. Die umlaufende Nut 23 ist mit dem Gehäuseauslaß 13 verbunden. Durch geeignete Kanäle wird der Ventilraum 11 mit dem Inneren des Gehäuses 1 verbunden, also beispielsweise einem vierten Bohrungsabschnitt 25 der Stufenbohrung 2.

Figur 4 zeigt eine Abänderung der Ausführungsform nach Figur 3, wobei an dieser Stelle nur die Abweichungen des Ausführungsbeispiels nach Figur 4 gegenüber dem Ausführungsbeispiel nach Figur 3 beschrieben werden sollen. Der wesentliche Unterschied ist, daß zusätzlich eine zweite Stufenbohrung 26 und eine dritte Stufenbohrung 27 vorgesehen sind, die im Winkel zueinander stehen und einander schneiden. Der zweite Bohrungsabschnitt 28 der zweiten Stufenbohrung 26 schafft Raum für die Aufnahme eines Filters während der zweite Bohrungsabschnitt 29 der dritten Stufenbohrung 27 als Blende zur Geräuschbedämpfung dient. Auf diese Weise wird der durch den zweiten Bohrungsabschnitt 28 in Verbindung mit dem Ventilraum 11 gebildete Gesamtraum in Verbindung mit dem blendenförmigen zweiten Bohrungsabschnitt 29 in die Schalldämpfung einbezogen. Die speichernde Wirkung des ersten Bohrungsabschnittes 30 der dritten Stufenbohrung 27 in Verbindung mit dem durch die umlaufende Nut 23 geschaffenen Raum trägt somit zur Geräuschverminderung bei.

Damit nun das Druckmittel tatsächlich von dem Ventilraum 11 über die zweite und dritte Stufenbohrung 26,27 und die umlaufende Nut zu dem nicht dargestellten Gehäuseauslaß verläuft ist ein abgedichteter Stopfen 31 vorgesehen, welcher den Ventilraum 11 in radialer Richtung abdichtet und an dem sich die Feder 9 abstützt.

Soll der Deckelkörper 22 austauschbar sein, so müssen, wie schon im Zusammenhang mit dem Ausführungsbeispiel nach Figur 3 beschrieben, die Hohlkehlen in das Gehäuse 24 eingearbeitet werden und der Deckelkörper 22 aus weicherem Material als das Gehäuse 1 gebildet werden.

## Patentansprüche

1. Ventil, welches in ein Gehäuse (1) eingesetzt ist, vorzugsweise Druckventil einer Radialkolbenpumpe, mit Ventilsitz (6), Ventilkörper (8), Vorspannfeder (9) und Gehäusedeckel (10), dadurch **gekennzeichnet**, daß das Gehäuse (1) aus einem weicheren Material als der Ventilsitz (6) gebildet ist und daß der Ventilsitz (6) eine zu einer umlaufenden Kante (17) eines stufenförmigen Absatzes (15) im Gehäuse (1) zugeordnete Hohlkehle (19) aufweist, in die mittels Kaltfließen beim Pressen des Ventilsitzes (6) auf den Gehäuseabsatz (15) Material des Absatzes (15) dichtend eingeformt ist.

2. Ventil nach Anspruch 1, dadurch **gekennzeichnet**, daß der Ventilsitz (6) einen sich in Richtung Deckel erstreckenden ringförmigen Ringansatz (7) aufweist, in den der Deckel insbesondere durch Einpressen, Verstemmen oder eine Kaltfließpressverbindung dichtend eingefügt ist.

3. Ventil nach Anspruch 2 dadurch **gekennzeichnet**, daß der Ringansatz (7) ebenso wie der Ventilsitz (6) durch Kaltfließpressen dichtend mit dem Gehäuse (1) verbunden ist.

4. Ventil nach Anspruch 1, dadurch **gekennzeichnet**, daß der Deckel (10) entsprechend dem Ventilsitz (6) durch Kaltfließpressen mit dem Gehäuse dichtend verbunden ist.

5. Ventil nach Anspruch 4 dadurch **gekennzeichnet**, daß der Deckel (10) mit dem Ventilsitz (6,7) einstückig zu einem Deckelkörper (22) vereint ist (Figur 3).

6. Ventil nach Anspruch 5 dadurch **gekennzeichnet**, daß der Ventilsitz in radialer Richtung angeordnet und der vorzugsweise kugelförmige Ventilkörper (8) in radialer Richtung vorgespannt ist.

7. Ventil nach Anspruch 6 dadurch **gekennzeichnet**, daß die Vorspannfeder (9) sich in radialer Richtung an der Wand der das Ventil aufnehmenden Gehäusebohrung (2) abstützt.

8. Ventil nach Anspruch 7 dadurch **gekennzeichnet**, daß die Einheit aus Ventilsitz und Deckel (Deckelkörper 22) mit einem als Dämpfungskammer dienenden Hohlraum (23,27) versehen ist, der über eine Blende (29) mit dem den Ventilkörper (8) aufnehmenden Ventilraum (11) verbunden ist.

9. Ventil nach Anspruch 8 dadurch **gekennzeichnet**, daß der Ventilraum (11) über zwei im Winkel zueinander angeordnete Bohrungen mit dem Hohlraum (23) verbunden sind.

10. Ventil nach Anspruch 9 dadurch **gekennzeichnet**, daß zumindest eine der beiden Bohrungen als Stufenbohrung (27) ausgestaltet ist und der verengte Bohrungsabschnitt (29) die Blende in der Verbindung bildet.

11. Ventil nach einem der Ansprüche 8 bis 10 dadurch **gekennzeichnet**, daß der Hohlraum durch eine umlaufende Nut (23) in dem Deckelkörper (22) gebildet ist, die durch die Wand der die Deckeleinheit (22) aufnehmenden Gehäusebohrung (2) geschlossen wird.

12. Ventil nach einem der Ansprüche 8 bis 11 dadurch **gekennzeichnet**, daß in eine der die Verbindung bildenden Bohrungen (26,27) ein Filter eingefügt ist.

13. Ventil, welches in ein Gehäuse (1) eingesetzt ist, vorzugsweise Druckventil einer Radialkolbenpumpe, mit Ventilsitz (6), Ventilkörper (8), Vorspannfeder (9) und Gehäusedeckel (10), dadurch **gekennzeichnet**, daß das Gehäuse (1) aus einem härteren Material als eine aus Ventilsitz (6) und Deckel (10) gebildeter Deckelkörper (22) ist, und daß das Gehäuse (1) eine Hohlkehle aufweist, in die mittels Kaltfließen beim Pressen des Deckelkörpers (22) auf einen entsprechenden Gehäuseabsatz Material des Deckelkörpers (22) dichtend eingeformt ist.

## Claims

1. Valve, inserted in a housing (1), preferably used as a pressure valve of a radial piston pump, including valve seat (6), valve member (8), biassing spring (9) and housing cover (10),
**characterized** in that the housing (1) is made of softer material than the valve seat (6), and in that the valve seat (6) includes a groove (19) associated with a circumferential edge (17) of a stepped shoulder (15) in the housing (1), in which groove material of the shoulder (15) is cold extruded so as to seal during press fit of the valve seat (6) on the housing shoulder (15).

2. Valve as claimed in claim 1,
**characterized** in that the valve seat (6) has an annular projection (7) extending in the direction of the cover, in which projection the cover is inserted in a sealing manner, particularly by a press fit, by caulking, or a cold extruded connection.

3. Valve as claimed in claim 2,
**characterize**d in that the annular projection (7), as well as the valve seat (6), is connected in a sealing manner to the housing (1) by cold extrusion.

4. Valve as claimed in claim 1,
**characterized** in that the cover (10), corresponding to the valve seat (6), is connected in a sealing manner to the housing by cold extrusion.

5. Valve as claimed in claim 4,
**characterized** in that the cover (10) is designed integrally with the valve seat (6, 7) in order to form a cover member (22) (Figure 3).

6. Valve as claimed in claim 5,
**characterized** in that the valve seat is arranged in a radial direction, and the preferably spherical valve element (8) is biassed in a radial direction.

7. Valve as claimed in claim 6,
**characterized** in that the biassing spring (9) is supported in a radial direction on the wall of the valve accommodating housing bore (2).

8. Valve as claimed in claim 7,
**characterized** in that the assembly consisting of valve seat and cover (cover member 22) has a cavity (23, 27), serving as a damping chamber and connected to the valve chamber (11) accommodating the valve member (8) by way of a restrictor (29).

9. Valve as claimed in claim 8,
**characterized** in that the valve chamber (11) is connected to the cavity (23) by way of two bores arranged at a certain angle to each other.

10. Valve as claimed in claim 9,
**characterized** in that at least one of the two bores is a stepped bore (27) and the small bore portion (29) functions as a restrictor in this connection.

11. Valve as claimed in any one of the claims 8 to 10,
**characterized** in that the cavity is provided by a circumferential groove (23) in the cover member (22), closed by the wall of the housing bore (2) accommodating the cover assembly (22).

12. Valve as claimed in any one of the claims 8 to 11,
**characterized** in that a filter is inserted in one of the bores (26, 27) establishing the connection.

13. Valve, inserted in a housing (1), preferably used as a pressure valve of a radial piston pump, including valve seat (6), valve member (8), biassing spring (9) and housing cover (10),
**characterized** in that the housing (1) is made of harder material than a cover member (22) including valve seat (6) and cover (10), and in that the housing (1) has a groove in which material of the cover member (22) is cold extruded so as to seal during the press fit of the cover member (22) on a mating housing shoulder.

## Revendications

1. Soupape qui est installée dans un boîtier (1), de préférence soupape de refoulement d'une pompe à pistons radiaux, comprenant un siège de soupape (6), un corps de soupape (8), un ressort de précontrainte (9) et un couvercle de boîtier (10), **caractérisée** en ce que le boîtier (1) est réalisé en un matériau plus mou que le siège de soupape (6), et en ce que le siège de soupape (6) présente un congé (19) associé à un bord entourant (17) d'un décrochement (15) en forme de gradin dans le boîtier (1), congé dans lequel du matériau du décrochement (15) est inséré en étanchéité par fluage à froid lors de l'enfoncement du siège de soupape (6) sur le décrochement (15) du boîtier.

2. Soupape selon la revendication 1, **caractérisée** en ce que le siège de soupape (6) présente un appendice annulaire (7) s'étendant en direction du couvercle, appendice dans lequel le couvercle est notamment inséré en étanchéité par enfoncement, par matage ou par un assemblage par matriçage à froid.

3. Soupape selon la revendication 2, **caractérisée** en ce que l'appendice annulaire (7) est, tout comme le siège de soupape (6), assemblé au boîtier (1) en étanchéité par matriçage à froid.

4. Soupape selon la revendication 1, **caractérisée** en ce que le couvercle (10) est, d'une manière correspondante au siège de soupape (6), assemblé au boîtier en étanchéité par matriçage à froid.

5. Soupape selon la revendication 4, **caractérisée** en ce que le couvercle (10) est réuni en une pièce avec le siège de soupape (6, 7) en un corps de couvercle (22) (figure 3).

6. Soupape selon la revendication 5, **caractérisée** en ce que le siège de soupape est disposé en direction radiale et le corps de soupape (8), de préférence en forme de bille, est précontraint en direction radiale.

7. Soupape selon la revendication 6, **caractérisée** en ce que le ressort de précontrainte (9) s'appuie en direction radiale contre la paroi du perçage de boîtier (2) recevant la soupape.

8. Soupape selon la revendication 7, **caractérisée** en ce que l'unité constituée du siège de soupape et du couvercle (corps de couvercle 22) est pourvue d'une cavité (23, 27) servant de chambre d'amortissement, cavité qui est reliée par l'intermédiaire d'un diaphragme (29) à la chambre de soupape (11) recevant le corps de soupape (8).

9. Soupape selon la revendication 8, **caractérisée** en ce que la chambre de soupape (11) est reliée à la cavité (23) par l'intermédiaire de deux perçages disposés en angle l'un par rapport à l'autre.

10. Soupape selon la revendication 9, **caractérisée** en ce qu'au moins un des deux perçages est réalisé sous forme de perçage échelonné (27), et la partie rétrécie (29) du perçage forme le diaphragme dans la liaison.

11. Soupape selon l'une quelconque des revendications 8 à 10, **caractérisée** en ce que la cavité est formée par une rainure entourante (23) dans le corps de couvercle (22), rainure qui est fermée par la paroi du perçage de boîtier (2) recevant l'unité de couvercle (22).

12. Soupape selon l'une quelconque des revendications 8 à 11, **caractérisée** en ce qu'un filtre est inséré dans un des perçages (26, 27) formant la liaison.

13. Soupape qui est installée dans un boîtier (1), de préférence soupape de refoulement d'une pompe à pistons radiaux, comprenant un siège de soupape (6), un corps de soupape (8), un ressort de précontrainte (9) et un couvercle de boîtier (10), **caractérisée** en ce que le boîtier (1) est réalisé en un matériau plus dur qu'un corps de couvercle (22) constitué du siège de soupape (6) et du couvercle (10), et en ce que le boîtier (1) présente un congé dans lequel du matériau du corps de couvercle (22) est inséré en étanchéité par fluage à froid lors de l'enfoncement du corps de couvercle (22) sur un décrochement correspondant du boîtier.
